# EUROPEAN PATENT SPECIFICATION

(11) **EP 3 696 494 B1**
(45) Date of publication and mention of the grant of the patent: **06.07.2022**
(21) Application number: 20160406.3
(22) Date of filing: 31.12.2014
(51) Int. Cl.: G01B 11/02, G01B 11/16, G01P 15/093

(54) **POSITION SENSOR AND CORRESPONDING SENSING METHOD**
POSITIONSENSOR UND ENTSPRECHENDES MESSVERFAHREN
CAPTEUR DE POSITION ET MÉTHODE DE MESURE CORRESPONDANTE

(43) Date of publication of application: 19.08.2020
(62) Divisional of application: 18156573.0
(73) Proprietor: Rememdia LC, Salt Lake City, UT 84109 (US)
(72) Inventor: SMITH, Fraser M., Salt Lake City, UT Utah 84109 (US)
(74) Representative: CMS Cameron McKenna Nabarro Olswang LLP

(56) References cited:
- EP-A1- 0 725 393
- CN-A- 103 234 457
- US-A- 4 275 599
- US-A1- 2007 062 284
- US-A1- 2012 044 477

## Description

### BACKGROUND

Sensors are used in a wide range of applications and are adapted to measure a wide variety of quantities. Many sensors can determine a desired quantity using a displacement measurement, such as a position sensor, a strain gage, a load cell, an accelerometer, an inertial measurement unit, a pressure gage, etc.

CN 103234457 A discloses a digital imaging-based multi-beam displacement measurement method. In the method, a fixing digital imaging unit and a movable measured target body are involved; a laser transmitter is arranged on the measured target body, and the linear displacement direction of the measured target body is parallel to the plane of a digital imaging unit sensor.

The present invention provides a sensor as defined in claim 1 and a method for facilitating a displacement measurement as defined in claim 10. Embodiments of the invention are set out in the dependent claims.

### BRIEF DESCRIPTION OF THE DRAWINGS

Features and advantages of the invention will be apparent from the detailed description which follows, taken in conjunction with the accompanying drawings, which together illustrate, by way of example, features of the invention; and, wherein:
FIG. 1 is a side schematic view of a sensor in accordance with an embodiment of the present invention.
FIG. 2 is a top schematic view of a light component of the sensor of FIG. 1.
FIG. 3A illustrates a side schematic view of a light source of a sensor in accordance with an embodiment of the present invention.
FIG. 3B illustrates a side schematic view of a light source of a sensor in accordance with another embodiment of the present invention.
FIG. 4 is a top schematic view of the sensor of FIG. 1 undergoing relative movement of a light component and an imaging component in two translational degrees of freedom, in accordance with an embodiment of the present invention.
FIG. 5 is a top schematic view of the sensor of FIG. 1 undergoing relative movement of a light component and an imaging component in a rotational degree of freedom, in accordance with an embodiment of the present invention.
FIG. 6 is a side schematic view of the sensor of FIG. 1 undergoing relative movement of a light component and an imaging component in a translational degree of freedom, in accordance with another embodiment of the present invention.
FIG. 7A is a side schematic view of the sensor of FIG. 1 undergoing relative movement of a light component and an imaging component in a rotational degree of freedom, in accordance with another embodiment of the present invention.
FIG. 7B is a side schematic view of the sensor of FIG. 1 undergoing relative movement of a light component and an imaging component in a rotational degree of freedom, in accordance with yet another embodiment of the present invention.
FIG. 8 is a top schematic view of a light component of a sensor in accordance with another embodiment of the present invention.
FIG. 9 is a perspective schematic view of a sensor in accordance with yet another embodiment of the present invention.
FIG. 10A is a side schematic view of a sensor in accordance with yet another embodiment of the present invention.
FIG. 10B is a side schematic view of a sensor in accordance with still another embodiment of the present invention.

Reference will now be made to the exemplary embodiments illustrated, and specific language will be used herein to describe the same. It will nevertheless be understood that no limitation of the scope of the invention is thereby intended.

### DETAILED DESCRIPTION

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, "adjacent" refers to the proximity of two structures or elements. Particularly, elements that are identified as being "adjacent" may be either abutting or connected. Such elements may also be near or close to each other without necessarily contacting each other. The exact degree of proximity may in some cases depend on the specific context.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Although typical sensors are generally effective for a given purpose, they often do not produce the same level of resolution in each degree of freedom. Additionally, obtaining measurement redundancy and/or measurements in multiple degrees of freedom can significantly increase size, complexity, and cost, which can preclude using redundant or multiple degree of freedom sensors in some applications. Thus, redundant sensors or multiple degree of freedom sensors can be more readily utilized by maintaining size, complexity, and cost within practical limits, such as those approximating single degree of freedom sensors.

Accordingly, a sensor is disclosed that can provide for redundancy and/or measurement in multiple degrees of freedom without significantly increasing size, complexity, or cost. In one aspect of the present invention as defined in claim 1, the sensor is adapted to measure any given quantity that can be determined using a displacement measurement. The sensor includes a light component in support of a first light source operable to direct a first beam of light, and a second light source operable to direct a second beam of light. The sensor also includes an imaging device positioned proximate the light component and operable to directly receive the first beam of light and the second beam of light and convert these into electric signals. The imaging device and the light component are movable relative to one another.

The sensor further includes a light location module configured to receive the electric signals and determine locations of the first beam of light and the second beam of light on the imaging device. In addition, the sensor includes a position module configured to determine a relative position of the imaging device and the light component based on the locations of the first beam of light and the second beam of light on the imaging device.

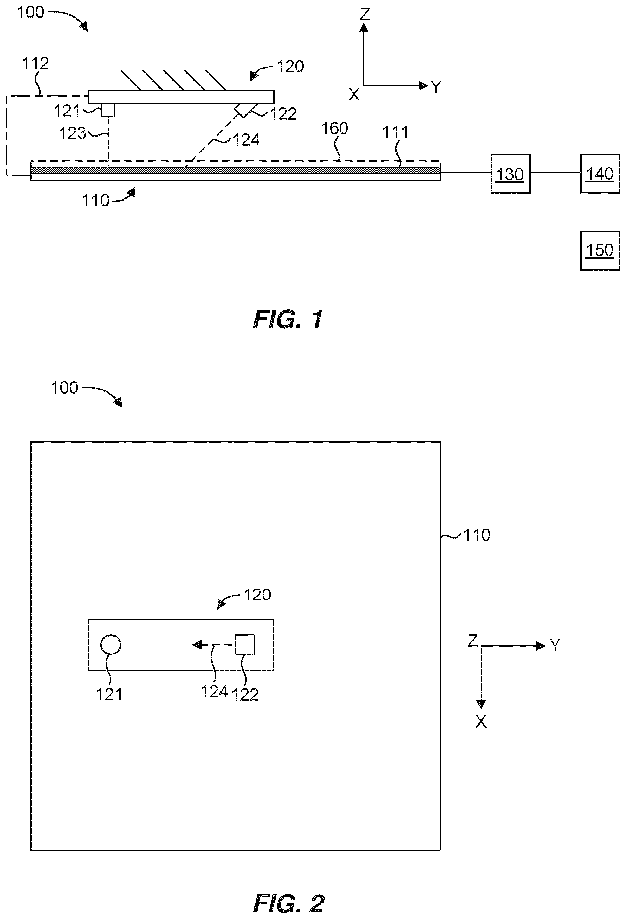

One embodiment of a sensor 100 is illustrated schematically in FIGS. 1 and 2. The sensor 100 can comprise an imaging device 110. The imaging device 110 can comprise an image sensor 111, such as a pixel sensor, photo sensor, or any other suitable type of imager that can convert light into electrical signals. In one aspect, the imaging device 110 can comprise an active pixel sensor having an integrated circuit containing an array of pixel sensors, wherein each pixel contains a photodetector and an active amplifier. Circuitry next to each photodetector can convert the light energy to a voltage. Additional circuitry may be included to convert the voltage to digital data. One example of an active pixel sensor is a complementary metal oxide semiconductor (CMOS) image sensor. In another aspect, the image device 110 can comprise a charge-coupled device (CCD) image sensor. In a CCD image sensor, pixels can be represented by p-doped MOS capacitors. These capacitors are biased above the threshold for inversion when light acquisition begins, allowing the conversion of incoming photons into electron charges at a semiconductor-oxide interface. The CCD is then used to read out these charges. Additional circuitry can convert the voltage into digital information. The imaging device 110 can therefore include any suitable device or sensor that is operable to capture light and convert it into electrical signals, such as an imaging sensor typically found in digital cameras, cell phones, web cams, etc.

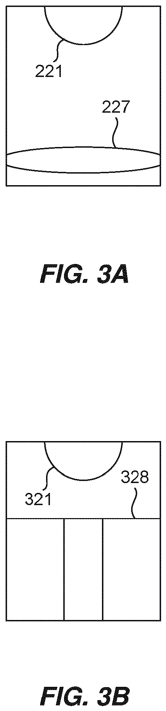

The sensor 100 can also include a light component 120 in support of one or more light sources 121, 122 operable to direct beams of light 123, 124, respectively. The light source 121, 122 can comprises an LED, a laser, an organic LED, a field emission display element, a surface-conduction electron-emitter display unit, a quantum dot, a cell containing an electrically charged ionized gas, a fluorescent lamp, a hole through which light from a larger light source located external to the plane of light emission can pass, and/or any other suitable light source. FIG. 3A illustrates a lens 227 operable with a light source 221 to focus or direct light from the light source 221 into a suitable beam of light. FIG. 3B illustrates a collimator 328 operable with a light source 321 to "narrow" light from the light source 321 into a suitable beam of light. It should be recognized that a lens and a collimator can be used alone or in any combination with a light source to achieve a suitable beam of light.

The imaging device 110 can be positioned proximate the light component 120 and operable to directly receive the beams of light 123, 124 and convert these into electric signals. A light location module 130 can be configured to receive the electric signals and determine locations of the beams of light 123, 124 on the imaging device 110. For example, pixels of the imaging device 110 can be individually addressed such that the light intensity on each individual pixel may be known or determined by the light location module 130.

The imaging device 110 and the light component 120 can be movable relative to one another in one or more degrees of freedom. Thus, a position module 140 can be configured to determine a relative position of the imaging device 110 and the light component 120 based on the locations of the beams of light 123, 124 on the imaging device 110. In one aspect, the imaging device 110 and the light component 120 can be coupled 112 to one another in a manner that facilitates relative movement. For example, the light component 120 can be "fixed" and the imaging device 110 can be supported about the light component 120 by a structure, device, or mechanism that can facilitate movement of the imaging device 110 relative to the light component 120. It should be recognized that in some embodiments the imaging device 110 can be "fixed." The imaging device 110 and the light component 120 can be constrained for relative movement only in one or more selected degrees of freedom, such as translation in the X axis or rotation about the Z axis. Any suitable arrangement of the imaging device 110 and the light component 120 is contemplated that facilitates relative movement of the imaging device 110 and the light component 120 in one or more desired degrees of freedom.

Such relative movement of the imaging device 110 and the light component 120 can facilitate measurement of a relative movement, such as a relative displacement and/or a rotation. Accordingly, a sensor in accordance with the present disclosure can be operable to measure or sense any quantity that can be based on, or that can be derived from, a relative movement, such as displacement, rotation, velocity, acceleration, etc. For example, a sensor as described herein can function as a position sensor, a strain gage, an accelerometer, a load sensor, or any other type of sensor that can utilize a relative motion to mechanically and/or computationally provide a measurement of a desired type. In one aspect, therefore, the sensor 100 can also include a clock 150 to measure elapsed time associated with a relative movement, as may be useful for determining velocity, acceleration, or other dynamic measurement quantities.

In addition, because the individual addresses of the pixels are known, the sensor 100 can be considered an "absolute" sensor. This attribute allows the sensor 100 to be powered off when not needed (i.e., to conserve energy) and powered on again to take a measurement or reading without needing to be initialized or otherwise calibrated to determine the relative position of the imaging device 110 and the light component 120.

The imaging device 110 can comprise a pixel array of any suitable size, dimension, aspect ratio, and/or pixel count. For example, the pixel array can be a one-dimensional array or a two-dimensional array, such as an array of pixels arranged in rows and columns. In one aspect, a range of motion of the sensor can be limited by the size of the imaging device, although multiple imaging devices can be disposed adjacent to one another to provide a greater range of motion for the sensor. In another aspect, a range of motion of the sensor can be impacted by the location and/or size of the light sources. Thus, light sources can be located and/or sized to accommodate the desired relative movements between the light component and the imaging device. It should be recognized that a sensor in accordance with the present disclosure can also produce substantially the same level of resolution in each degree of freedom.

In one aspect, center locations of the beams of light 123, 124 on the imaging device 110 can be determined utilizing a statistical method applied to the locations of the beams of light 123, 124 on the imaging device 110. Such computations can be performed by the position module 140. For example, each beam of light 123, 124 can be distributed across many pixels on the imaging device 110 and can exhibit an intensity gradient that can be analyzed using statistical methods to determine the center of the beam.

In another aspect, the imaging device 110 can be monochromatic or chromatic and the light sources 121, 122 can produce any suitable color of light, such as white, red, green, or blue. The color selectivity of chromatic pixels to specific light beam wavelengths can be utilized to effectively increase pixel populations, which can be used to determine the location of the center of the beams without degradation from a neighboring light beam on the imaging device. For example, three light sources (red, green, and blue) can be used in close proximity to one another with a chromatic imaging device in place of a single light source with a monochromatic imaging device to determine a relative movement of the light component 120 and the imaging device 110 without interference from one another. The chromatic imaging device can track or sense different color light beams separately, even though the light beams may overlap on the imaging device. Different parts of the imaging device corresponding to different colors can generate separate signals that can be used to determine the relative movement of the light source and the imaging device, such as by providing redundancy and/or additional data points for computation.

Thus, in one aspect, the imaging device can comprise a color separation mechanism 160. Any suitable color separation mechanism can be used, such as a Bayer sensor in which a color filter array passes red, green, or blue light to selected pixel sensors, a Foveon X3 sensor in which an array of layered pixel sensors separate light via the inherent wavelength-dependent absorption property of silicon, such that every location senses all three color channels, or a 3CCD sensor that has three discrete image sensors, with the color separation done by a dichroic prism.

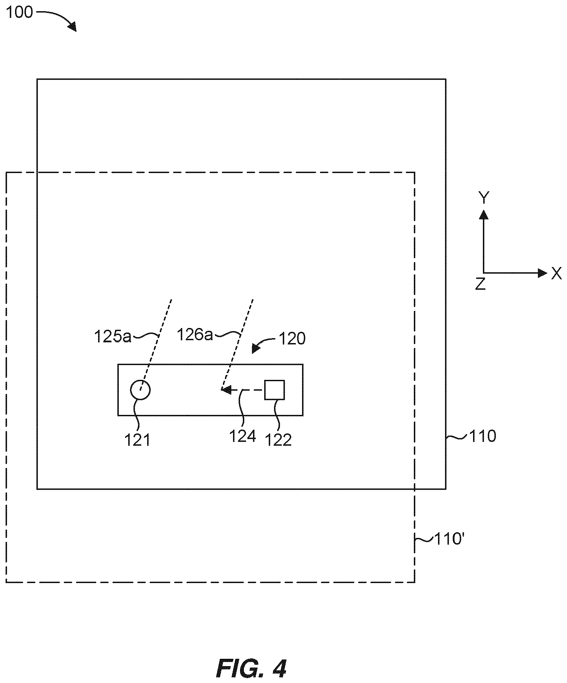

FIGS. 4-7B, with continued reference to FIGS. 1 and 2, illustrate the sensor 100 undergoing relative movement of the imaging device 110 and the light component 120. The light source 121 produces light beam 123 that can be referred to generally as a "perpendicular" light beam, in that the light beam 123 is perpendicular or substantially perpendicular to the imaging device 110 in a nominal relative orientation of the imaging device 110 and the light component 120. The light source 122 produces light beam 124 that can be referred to generally as an "angled" light beam, in that the light beam 124 is at a non-perpendicular and non-parallel angle to the imaging device 110 in a nominal relative orientation of the imaging device 110 and the light component 120. The light sources 121, 122 can therefore be termed perpendicular and angled light sources, respectively.

In general, a single light source can be used to determine relative movement in two translational degrees of freedom. As shown in FIG. 4 for example, the light source 121, which directs the light beam 123 substantially perpendicular to the X and Y translational degrees of freedom, can be used to determine relative movement of the imaging device 110 and the light component 120 in these two translational degrees of freedom. In addition, the light source 122, which directs the light beam 124 non-parallel to the light beam 123, can be used to determine relative movement of the imaging device 110 and the light component 120 in the X and Y translational degrees of freedom. Movement by the light beams 123, 124 can trace paths 125a, 126a, respectively, along the imaging device 110 as the imaging device 110' moves from an initial position to the final position of the imaging device110. Pixels along each of the paths 125a, 126a can be used to determine the relative motion of the imaging device 110 and the light component 120, such as by providing redundancy and/or additional data points for computation.

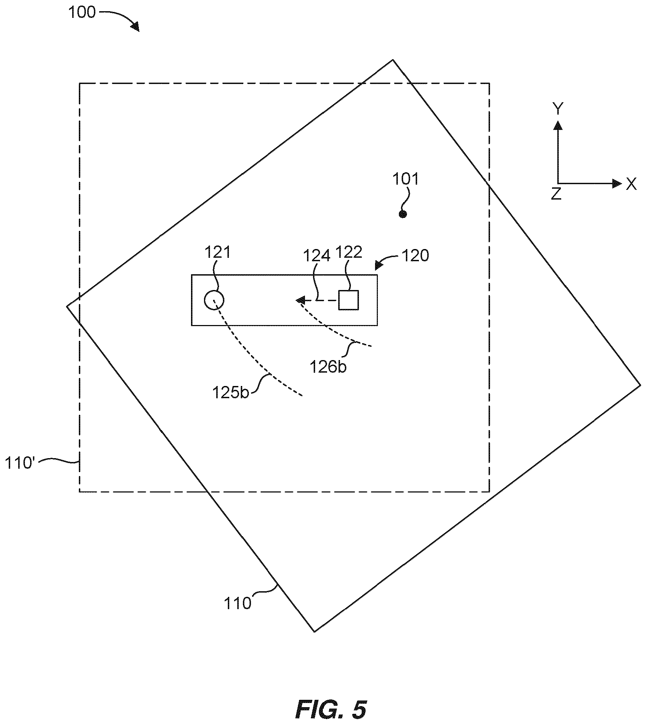

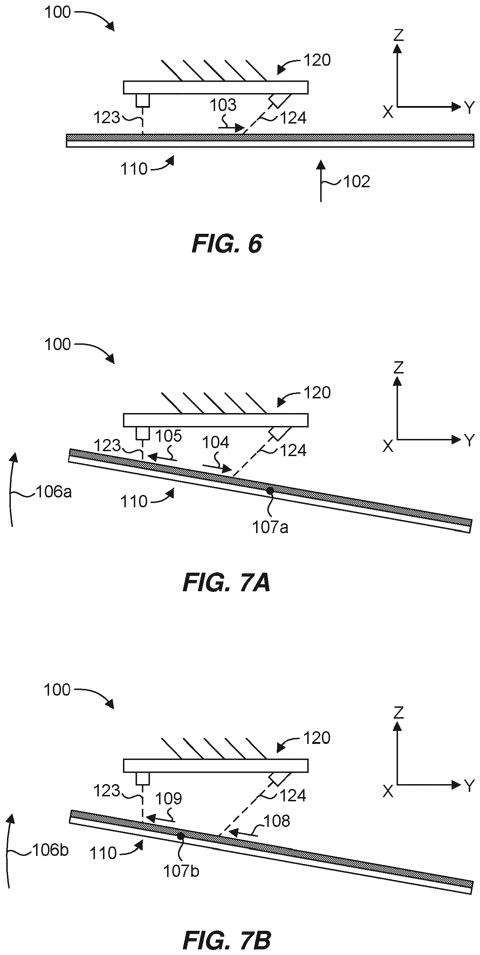

As shown in FIG. 5, and with further reference to FIGS. 1 and 2, the imaging device 110 and the light component 120 can be movable relative to one another in a rotational degree of freedom, in this case about the Z axis. Movement by the light beams 123, 124 can trace paths 125b, 126b, respectively, along the imaging device 110 as the imaging device 110' moves from an initial position to the final position of the imaging device110. Pixels along the paths 125b, 126b of both light beams 123, 124, respectively, can be used to determine the relative motion of the imaging device 110 and the light component 120, which in this case has a center of rotation 101. As illustrated, the light beam 123 is directed substantially parallel to the axis of the rotational degree of freedom and the light beam 124 is non-parallel to the light beam 123. In other words, a perpendicular beam and an angled beam are used. It should be recognized, however, that relative movement in the translational and rotational degrees of freedom shown in FIGS. 5 and 6 can be determined with two perpendicular beams or two angled beams.

FIG. 6 illustrates that the imaging device and the light component can be movable relative to one another in a translational degree of freedom, in this case, along the Z axis. In other words, the perpendicular light beam 123 is directed substantially parallel to the axis of the translational degree of freedom and the angled light beam 124 is non-parallel to the light beam 123, such that relative movement of the imaging device 110 and the light component 120 in the translational degree of freedom causes the light beam 123 and/or the light beam 124 to be directed onto different locations of the imaging device 110. For example, as the imaging device 110 moves in direction 102 along the Z axis toward the light component 120, the angled light beam 124 moves in direction 103 along the imaging device 110. This movement of the angled light beam 124 can be used to determine the relative translational movement along the Z axis. In addition, the lack of movement of the perpendicular light beam 123 can also factor into a determination of the relative translational movement along the Z axis. It should be recognized, therefore, that a single angled beam of light can be used to determine relative movement in three orthogonal translational degrees of freedom.

FIGS. 7A and 7B illustrate further use of the angled light beam 124 in determining relative movement of the imaging device 110 and the light component 120 in a rotational degree of freedom, in this case about the X axis. Thus, the perpendicular light beam 123 is directed substantially perpendicular to the axis of the rotational degree of freedom. As shown in FIG. 7A, angled light beam 124 moves in direction 104 along the imaging device 110 and perpendicular light beam 123 moves in opposite direction 105 along the imaging device 110. The difference in directions as well as the relative locations of the light beams 123, 124 on the imaging device 110 and the angle 127 of the angled light beam 124 can be used to determine that the imaging device 110 rotated relative to the light component 120 in direction 106a about a center of rotation 107a. In this case, both light beams 123, 124 are on the "same side" of the center of rotation 107a.

As shown in FIG. 7B on the other hand, angled light beam 124 moves in direction 108 along the imaging device 110 and perpendicular light beam 123 moves in the same direction 109 along the imaging device 110. The similarity in directions as well as the relative locations of the light beams 123, 124 on the imaging device 110 and the angle 127 of the angled light beam 124 can be used to determine that the imaging device 110 rotated relative to the light component 120 in direction 106b about a center of rotation 107b. In this case, both light beams 123, 124 are on "opposite sides" of the center of rotation 107b. Thus, the movement and direction of the angled beam 124 and the perpendicular beam 123 along the imaging device 110 can be used to determine the relative movement of the imaging device 110 and the light component 120 in a rotational degree of freedom that tends to move portions of the imaging device 110 and the light component 120 toward one another, such as rotation about the X axis.

It should be recognized that a sensor in accordance with the present disclosure can have multiple translational degrees of freedom and/or multiple rotational degrees of freedom. Additional light sources, over the two light sources 121, 122 of sensor 100, can reduce or eliminate situations that can "trick" the sensor into incorrectly determining a relative movement, particularly when complex movements are compounded into multiple translational and rotational degrees of freedom. Another benefit of additional light sources, in general, is improved resolution of the sensor, in that there is more light movement across the imaging device and therefore more pixels to interrogate to obtain data can be utilized to determine the relative movement of the imaging device and the light component. A further benefit of additional light sources, over two light sources, is simplified calculation algorithms.

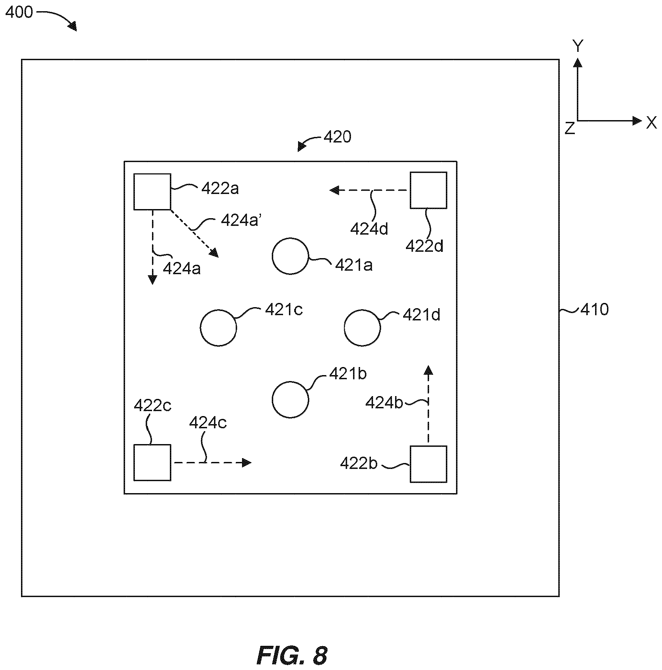

Accordingly, FIG. 8 illustrates an embodiment of a sensor 400 that can eliminate potential computational ambiguities as well as improve resolution due to the number, placement, and orientation of the light sources, particularly when undergoing relative movement in multiple degrees of freedom. For example, the sensor 400 can include four perpendicular light sources 421a-d and four angled light sources 422a-d. In one aspect, the angled light sources 422a-d can be oriented to direct light beams 424a-d in planes parallel to degree of freedom axes. For example, light beams 424a, 424b are in planes parallel to the Y axis and light beams 424c, 424d are in planes parallel to the X axis. It should be recognized, however, that the angled light beams can be oriented in any direction, as illustrated by light beam 424a', which is oriented in some arbitrary direction.

The particular arrangement shown in the figure has the perpendicular light sources 421a-d located in a center portion of the light component 420 and angled light sources 422a-d located generally about a periphery of the perpendicular light sources 421a-d. Due to their nominal perpendicular orientation with respect to the imaging device 410, the light beams generated by the perpendicular light sources 421a-d will not "sweep across" as much of the imaging device 410 as the light beams 424a-d of the angled light sources 422a-d during movement that alters a relative position of the imaging device 410 and the light component in the Z axis, such as Z axis translation, or rotation about the X and Y axes. Light sources, such as the angled light sources 422a-d, can therefore be positioned and/or oriented to provide greater movement across the imaging device 410 for relative movements of the imaging device 410 and the light component 420 in certain degrees of freedom, which can enhance the resolution of the sensor data. Thus, grouping the perpendicular light sources 421a-d in a center portion and disposing the angled light sources 422a-d about a periphery of the perpendicular light sources 421a-d can be an efficient placement configuration for maximizing effective use of the imaging device area available with an increased number of light sources 421a-d, 422a-d. In one aspect, colored light sources and a color separation mechanism can also be employed to fit an increased number of light sources into a small area without degrading the performance of the sensor.

The number of light sources and the placement and orientation of the light sources shown in the figure is merely illustrative of a configuration that can be used to ensure that no relative movement of the imaging device and light component can "trick" the sensor into a faulty or incorrect reading. It should be recognized therefore that any number of perpendicular or angled light sources can be used in any relative position or orientation to achieve a desired result, such as redundancy or level of resolution.

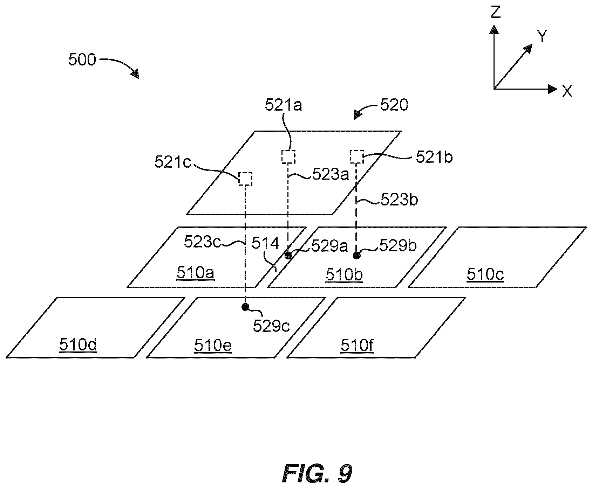

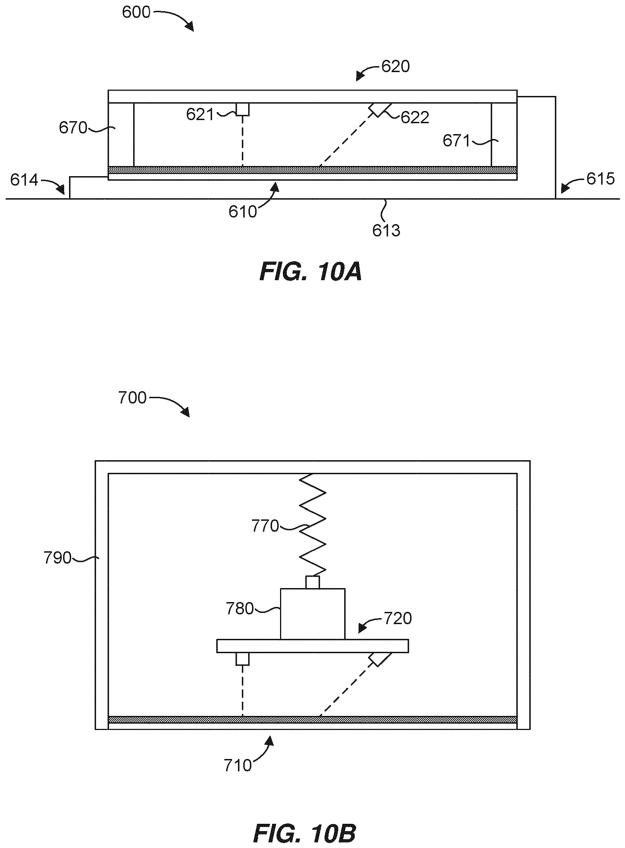

FIG. 9 illustrates another embodiment of a sensor 500 that can include multiple light sources 510a-c as well as multiple imaging devices 510a-f disposed adjacent to one another to provide continuous measurement over a larger range of motion that may available using only a single imaging device. For example, the sensor 500 can include any of the features and elements described hereinabove, such as a light component 520 in support of the light sources 521a-c (which may be perpendicular and/or angled) that direct light beams 523a-c, respectively, toward one or more of the imaging devices 510a-f at a given time. As shown, the imaging devices 510a-f are arranged in a staggered configuration with a region 514 in between imaging devices where no image sensor is present, such as at an interface between adjacent imaging devices. A light beam 523a may terminate 529a in the region 514 between adjacent imaging devices 510a, 510b, in which case the light beam 523a will not contribute to the position determining functionality of the sensor 500. However, in this case, light beams 523b, 523c can terminate 529b, 529c on imaging devices 510b, 510e, respectively, to contribute to the position determining functionality of the sensor 500 even when the light beam 523a cannot. In other words, the other imaging devices 510b, 510e still receiving light beams 523b, 523c, respectively, can compensate for the loss of signal from any given light source, such as 521a. In one aspect, the number and/or arrangement of imaging devices and/or light sources can be configured to ensure that at least one light source will terminate on an imaging device throughout a desired range of motion of the sensor and in any degree of freedom of the sensor Thus, in this way, multiple light sources can be used to ensure that the sensor 500 is operable to determine relative position of the light component 520 and the imaging devices 510a-f even when a light source is directing a beam of light to an area that is without an image sensor. With reference to FIGS. 10A and 10B, illustrated are two additional sensors in accordance with the present disclosure. For example, FIG. 10A illustrates a sensor 600 having an elastic member 670, 671 coupled to the imaging device 610 and the light component 620 to facilitate relative movement of the imaging device 610 and the light component 620. The elastic member 670, 671 can establish a nominal relative position for the imaging device 610 and the light component 620 and can facilitate relative movement of the imaging device 610 and the light component 620 in any suitable degree of freedom. The elastic member 670, 671 can comprise a spring, which can be configured as any suitable metal spring or as an elastomeric spring. Thus, in one aspect, the elastic member 670, 671 can act as a polymer suspension system for the imaging device 610 and the light component 620.

In one aspect, the elastic member 670, 671 can be disposed outboard of the light sources 621, 622. In another aspect, the elastic member can comprise a transparent layer disposed between the imaging device 610 and the light component 620. In one embodiment, the elastic member can comprise a silicone layer that acts as a separator between the imaging device 610 and the light component 620, which may provide a low displacement and high resolution sensor. In one aspect, the range of motion for the sensor 600 can be limited by the size of the imaging device 610 and the type of suspension or separation structure, which can depend on the magnitude of the desired range of motion and/or the application of the particular sensor.

For example, one application for the sensor 600 can be as a strain gage. In this case, the imaging device 610 can be anchored to a surface 613 at location 614 and the light component can be anchored to the surface 613 at location 615. As the surface 613 experiences strain, the imaging device 610 and the light component 620 will move relative to one another, which movement can serve to facilitate measurement of the strain in one or more degrees of freedom.

FIG. 10B illustrates another example of a sensor 700 having a mass 780 associated with the light component 720, which can enable the sensor 700 to measure acceleration and/or function as a navigation aid. The mass 780 and the light component 720 can be supported by an elastic member 770, such as a spring, to facilitate relative movement of the imaging device 710 and the light component 720 in one or more degrees of freedom. In one aspect, the elastic member 770 can be coupled to a support structure 790, which can be coupled to the imaging device 710. Although the light component 720 is shown in the figure as being associated with the mass 780 and suspended by the elastic member 770, it should be recognized that the imaging device 710 can be associated with the mass 780 and suspended by the elastic member 770.

In another example of a sensor (not shown), a whisker can be coupled to an imaging device or a light component and placed in a flow field to determine boundary layer thickness. In yet another example of a sensor (not shown), an imaging sensor and a light component can be configured for continuous relative rotation to measure rotary position.

In accordance with one embodiment of the present invention as defined in the independent claim 10, a method for facilitating a displacement measurement is disclosed. The method comprises providing a light component in support of a first light source operable to direct a first beam of light, and a second light source operable to direct a second beam of light. The method also comprises providing an imaging device positioned proximate to the light component and operable to directly receive the first beam of light and the second beam of light and convert these into electric signals. The method further comprises providing a light location module configured to receive the electric signals and determine locations of the first beam of light and the second beam of light on the imaging device. The method still further comprises providing a position module configured to determine a relative position of the imaging device and the light component based on the locations of the first beam of light and the second beam of light on the imaging device. Additionally, the method can comprise facilitating relative movement of the imaging device and the light component. It is noted that no specific order is required in this method, though generally in one embodiment, these method steps can be carried out sequentially.

In one aspect of the method, the second beam of light is non-parallel to the first beam of light. In another aspect of the method, facilitating relative movement of the imaging device and the light component comprises facilitating relative movement in at least one of a translational degree of freedom and a rotational degree of freedom.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the foregoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A sensor (100), comprising:
a first light source (121) that generates a first beam of light;
a second light source (122) that generates a second beam of light, wherein the first light source and the second light source are supported by a light support structure (120);
an imager (110) that directly receives the first beam of light and the second beam of light, wherein the imager is positioned proximate to the light support structure and the imager and the light support structure are movable relative to one another;
an elastic member (670 and 671) that connects the light support structure to the imager, wherein the elastic member is operable to facilitate relative movement of the imager and the light support structure;
a light location module (130) that determines locations of the first beam of light and the second beam of light on the imager, and
a position module (140) that determines a relative position of the imager and the light support structure based on the locations of the first beam of light and the second beam of light.

2. The sensor according to claim 1, wherein the elastic member includes a first elastic member (670) and a second elastic member (671).

3. The sensor according to claim 1,
wherein the first light source is a first chromatic light source and the second light source is a second chromatic light source; and
wherein the imager includes:
a color separation mechanism that separates the first beam of light and the second beam of light into a beam of light of a first color and a beam of light of a second color,
a first monochromatic detector that receives the beam of light of the first color and converts the beam of light of the first color into a first electrical signal, and
a second monochromatic detector that receives the beam of light of the second color and converts the beam of light of the second color into a second electrical signal.

4. The sensor according to claim 1, wherein the sensor further determines the relative movement of the light support structure and the imager in multiple degrees of freedom.

5. The sensor according to claim 1, wherein the elastic member forms a transparent layer between the imager and the light support structure.

6. The sensor according to claim 1, wherein the light support structure is mechanically coupled to an object to be sensed; and
the sensor further calculates a strain on a surface of the object in one or more degrees of freedom based on the relative position of the imager and the light support structure.

7. The sensor according to claim 1, further comprising a mass (780) associated with the light support structure or the imager; and
the sensor determines acceleration based at least in part on the mass.

8. The sensor according to claim 1, further comprising:
one or more additional light sources that each generate a respective beam of light; and
wherein the imager receives each respective beam of light, and
the position module further determines the relative position of the imager and the light support structure based on locations of each respective beam of light determined by the light location module.

9. The sensor according to claim 1, wherein the imager is a chromatic imaging device that senses different color light beams separately.

10. A method for facilitating a displacement measurement, the method comprising:
generating, by a first light source (121), a first beam of light;
generating, by a second light source (122), a second beam of light, wherein the first light source and the second light source are supported by a light support structure (120);
directly receiving, by an imager (110) that is positioned proximate to the light support structure, the first beam of light and the second beam of light, wherein the imager and the light support structure are movable relative to one another;
connecting, by an elastic member (670 and 671), the light support structure to the imager, wherein the elastic member is operable to facilitate relative movement of the imager and the light support structure;
determining, by a light location module (130), locations of the first beam of light and the second beam of light on the imager, and
determining, by a position module (140), a relative position of the imager and the light support structure based on the locations of the first beam of light and the second beam of light.

11. The method of claim 10, wherein the elastic member (670 and 671) includes a first elastic member (670) and a second elastic member (671).

12. The method of claim 10, further comprising:
converting the first beam of light into a first electrical signal; and
converting the second beam of light into a second electrical signal.

13. The method of claim 10, wherein the first light source is a first chromatic light source and the second light source is a second chromatic light source, wherein the method further comprises:
separating the first beam of light and the second beam of light into a beam of light of a first color and a beam of light of a second color,
converting the beam of light of the first color into a first electrical signal; and
converting the beam of light of the second color into a second electrical signal.

14. The method of claim 10, further comprising:
determining the relative movement of the light support structure and the imager in multiple degrees of freedom.

## Patentansprüche

1. Sensor (100), umfassend:
eine erste Lichtquelle (121), die einen ersten Lichtstrahl erzeugt;
eine zweite Lichtquelle (122), die einen zweiten Lichtstrahl erzeugt, wobei die erste Lichtquelle und die zweite Lichtquelle von einer Lichtträgerstruktur (120) getragen werden;
einen Bildgeber (110), der den ersten Lichtstrahl und den zweiten Lichtstrahl direkt empfängt, wobei der Bildgeber in der Nähe der Lichtträgerstruktur positioniert ist und der Bildgeber und die Lichtträgerstruktur relativ zueinander beweglich sind;
ein elastisches Element (670 und 671), das die Lichtträgerstruktur mit dem Bildgeber verbindet, wobei das elastische Element betreibbar ist, um eine relative Bewegung des Bildgebers und der Lichtträgerstruktur zu erleichtern;
ein Lichtortungsmodul (130), das die Orte des ersten Lichtstrahls und des zweiten Lichtstrahls auf dem Bildgeber bestimmt, und
ein Positionsmodul (140), das eine relative Position des Bildgebers und der Lichtträgerstruktur basierend auf den Positionen des ersten Lichtstrahls und des zweiten Lichtstrahls bestimmt.

2. Sensor nach Anspruch 1, wobei das elastische Element ein erstes elastisches Element (670) und ein zweites elastisches Element (671) einschließt.

3. Sensor nach Anspruch 1,
wobei die erste Lichtquelle eine erste chromatische Lichtquelle ist und die zweite Lichtquelle eine zweite chromatische Lichtquelle ist; und
wobei der Bildgeber folgendes einschließt:
einen Farbtrennmechanismus, der den ersten Lichtstrahl und den zweiten Lichtstrahl in einen Lichtstrahl einer ersten Farbe und einen Lichtstrahl einer zweiten Farbe trennt,
einen ersten monochromatischen Detektor, der den Lichtstrahl der ersten Farbe und umwandelt den Lichtstrahl der ersten Farbe in ein erstes elektrisches Signal, und
einen zweiten monochromatischen Detektor, der den Lichtstrahl der zweiten Farbe empfängt und den Lichtstrahl der zweiten Farbe in ein zweites elektrisches Signal umwandelt.

4. Sensor nach Anspruch 1, wobei der Sensor weiter die relative Bewegung der Lichtträgerstruktur und des Bildgebers in mehreren Freiheitsgraden bestimmt.

5. Sensor nach Anspruch 1, wobei das elastische Element eine transparente Schicht zwischen dem Bildgeber und der Lichtträgerstruktur bildet.

6. Sensor nach Anspruch 1, wobei die Lichtträgerstruktur mechanisch mit einem zu erfassenden Objekt gekoppelt ist; und
wobei der Sensor weiter eine Belastung einer Oberfläche des Objekts in einem oder mehreren Freiheitsgraden basierend auf der relativen Position des Bildgebers und der Lichtträgerstruktur berechnet.

7. Sensor nach Anspruch 1, weiter umfassend eine Masse (780), die der Lichtträgerstruktur oder dem Bildgeber zugeordnet ist; und
wobei der Sensor die Beschleunigung zumindest teilweise basierend auf der Masse bestimmt.

8. Sensor nach Anspruch 1, weiter umfassend:
eine oder mehrere zusätzliche Lichtquellen, die jeweils einen entsprechenden Lichtstrahl erzeugen; und
wobei der Bildgeber jeden einzelnen Lichtstrahl empfängt, und
das Positionsmodul weiter die relative Position des Bildgebers und der Lichtträgerstruktur basierend auf den vom Lichtortungsmodul ermittelten Orten jedes einzelnen Lichtstrahls bestimmt.

9. Sensor nach Anspruch 1, wobei der Bildgeber eine chromatische Bildgebungsvorrichtung ist, die verschiedene Farblichtstrahlen getrennt erfasst.

10. Verfahren zur Erleichterung einer Verschiebungsmessung, wobei das Verfahren umfasst:
Erzeugung, durch eine erste Lichtquelle (121), eines ersten Lichtstrahls;
Erzeugen, durch eine zweite Lichtquelle (122), eines zweiten Lichtstrahls, wobei die erste Lichtquelle und die zweite Lichtquelle von einer Lichtträgerstruktur (120) getragen werden;
direktes Empfangen des ersten Lichtstrahls und des zweiten Lichtstrahls durch einen Bildgeber (110), der in der Nähe der Lichtträgerstruktur angeordnet ist, wobei der Bildgeber und die Lichtträgerstruktur relativ zueinander beweglich sind;
Verbinden der Lichtträgerstruktur mit dem Bildgeber durch ein elastisches Element (670 und 671), wobei das elastische Element betreibbar ist, um eine relative Bewegung des Bildgebers und der Lichtträgerstruktur zu erleichtern;
Bestimmen der Orte des ersten Lichtstrahls und des zweiten Lichtstrahls auf dem Bildgeber durch ein Lichtortungsmodul (130), und
Bestimmen, durch ein Positionsmodul (140), einer relativen Position des Bildgebers und der Lichtträgerstruktur basierend auf den Orten des ersten Lichtstrahls und des zweiten Lichtstrahls.

11. Verfahren nach Anspruch 10, wobei das elastische Element (670 und 671) ein erstes elastisches Element (670) und ein zweites elastisches Element (671) einschließt.

12. Verfahren nach Anspruch 10, weiter umfassend:
Umwandeln des ersten Lichtstrahls in ein erstes elektrisches Signal; und
Umwandeln des zweiten Lichtstrahls in ein zweites elektrisches Signal.

13. Verfahren nach Anspruch 10, wobei die erste Lichtquelle eine erste chromatische Lichtquelle ist und die zweite Lichtquelle eine zweite chromatische Lichtquelle ist, wobei das Verfahren weiter umfasst:
Trennen des ersten und des zweiten Lichtstrahls in einen Lichtstrahl einer ersten Farbe und einen Lichtstrahl einer zweiten Farbe,
Umwandeln des Lichtstrahls der ersten Farbe in ein erstes elektrisches Signal; und
Umwandeln des Lichtstrahls der zweiten Farbe in ein zweites elektrisches Signal.

14. Verfahren nach Anspruch 10, weiter umfassend:
Bestimmen der relativen Bewegung der Lichtträgerstruktur und des Bildgebers in mehreren Freiheitsgraden.

## Revendications

1. Capteur (100), comprenant :
une première source de lumière (121) qui génère un premier faisceau de lumière ;
une seconde source de lumière (122) qui génère un second faisceau de lumière, dans lequel la première source de lumière et la seconde source de lumière sont supportées par une structure de support de lumière (120) ;
un dispositif d'imagerie (110) qui reçoit directement le premier faisceau de lumière et le second faisceau de lumière, dans lequel le dispositif d'imagerie est positionné à proximité de la structure de support de lumière et le dispositif d'imagerie et la structure de support de lumière sont mobiles l'un par rapport à l'autre ;
un élément élastique (670 et 671) qui relie la structure de support de lumière au dispositif d'imagerie, dans lequel l'élément élastique est utilisable pour faciliter le mouvement relatif du dispositif d'imagerie et de la structure de support de lumière ;
un module d'emplacement de lumière (130) qui détermine les emplacements du premier faisceau de lumière et du second faisceau de lumière sur le dispositif d'imagerie, et
un module de position (140) qui détermine une position relative du dispositif d'imagerie et de la structure de support de lumière sur la base des emplacements du premier faisceau de lumière et du second faisceau de lumière.

2. Capteur selon la revendication 1, dans lequel l'élément élastique inclut un premier élément élastique (670) et un second élément élastique (671).

3. Capteur selon la revendication 1,
dans lequel la première source de lumière est une première source de lumière chromatique et la seconde source de lumière est une seconde source de lumière chromatique ; et
dans lequel le dispositif d'imagerie inclut :
un mécanisme de séparation de couleurs qui sépare le premier faisceau de lumière et le second faisceau de lumière en un faisceau de lumière d'une première couleur et un faisceau de lumière d'une seconde couleur,
un premier détecteur monochromatique qui reçoit le faisceau de lumière de la première couleur et convertit le faisceau de lumière de la première couleur en un premier signal électrique, et
un second détecteur monochromatique qui reçoit le faisceau de lumière de la seconde couleur et convertit le faisceau de lumière de la seconde couleur en un second signal électrique.

4. Capteur selon la revendication 1, dans lequel le capteur détermine en outre le mouvement relatif de la structure de support de lumière et du dispositif d'imagerie dans de multiples degrés de liberté.

5. Capteur selon la revendication 1, dans lequel l'élément élastique forme une couche transparente entre le dispositif d'imagerie et la structure de support de lumière.

6. Capteur selon la revendication 1, dans lequel la structure de support de lumière est couplée mécaniquement à un objet à détecter ; et
le capteur calcule en outre une contrainte sur une surface de l'objet dans un ou plusieurs degrés de liberté sur la base de la position relative du dispositif d'imagerie et de la structure de support de lumière.

7. Capteur selon la revendication 1, comprenant en outre une masse (780) associée à la structure de support de lumière ou au dispositif d'imagerie ; et
le capteur détermine une accélération sur la base d'au moins une partie de la masse.

8. Capteur selon la revendication 1, comprenant en outre :
une ou plusieurs sources de lumière supplémentaires qui génèrent chacune un faisceau de lumière respectif ; et
dans lequel le dispositif d'imagerie reçoit chaque faisceau de lumière respectif, et
le module de position détermine en outre la position relative du dispositif d'imagerie et de la structure de support de lumière sur la base des emplacements de chaque faisceau de lumière respectif déterminés par le module d'emplacement de lumière.

9. Capteur selon la revendication 1, dans lequel le dispositif d'imagerie est un dispositif d'imagerie chromatique qui détecte séparément différents faisceaux de lumière de couleur.

10. Procédé pour faciliter une mesure de déplacement, le procédé comprenant :
la génération, par une première source de lumière (121), d'un premier faisceau de lumière ;
la génération, par une seconde source de lumière (122), d'un second faisceau de lumière, dans lequel la première source de lumière et la seconde source de lumière sont supportées par une structure de support de lumière (120) ;
la réception directe, par un dispositif d'imagerie (110) qui est positionné à proximité de la structure de support de lumière, du premier faisceau de lumière et du second faisceau de lumière, dans lequel le dispositif d'imagerie et la structure de support de lumière sont mobiles l'un par rapport à l'autre ;
la connexion, par un élément élastique (670 et 671), de la structure de support de lumière au dispositif d'imagerie, dans lequel l'élément élastique est utilisable pour faciliter le mouvement relatif du dispositif d'imagerie et de la structure de support de lumière ;
la détermination, par un module d'emplacement de lumière (130), des emplacements du premier faisceau de lumière et du second faisceau de lumière sur le dispositif d'imagerie, et
la détermination, par un module de position (140), d'une position relative du dispositif d'imagerie et de la structure de support de lumière sur la base des emplacements du premier faisceau de lumière et du second faisceau de lumière.

11. Procédé selon la revendication 10, dans lequel l'élément élastique (670 et 671) inclut un premier élément élastique (670) et un second élément élastique (671).

12. Procédé selon la revendication 10, comprenant en outre :
la conversion du premier faisceau de lumière en un premier signal électrique ; et
la conversion du second faisceau de lumière en un second signal électrique.

13. Procédé selon la revendication 10, dans lequel la première source de lumière est une première source de lumière chromatique et la seconde source de lumière est une seconde source de lumière chromatique, dans lequel le procédé comprend en outre :
la séparation du premier faisceau de lumière et du second faisceau de lumière en un faisceau de lumière d'une première couleur et un faisceau de lumière d'une seconde couleur,
la conversion du faisceau de lumière de la première couleur en un premier signal électrique ; et
la conversion du faisceau de lumière de la seconde couleur en un second signal électrique.

14. Procédé selon la revendication 10, comprenant en outre :
la détermination du mouvement relatif de la structure de support de lumière et du dispositif d'imagerie dans de multiples degrés de liberté.
